# EUROPÄISCHE PATENTANMELDUNG

(11) **EP 2 209 053 A2**
(43) Veröffentlichungstag der Anmeldung: **21.07.2010**
(21) Anmeldenummer: 09014119.3
(22) Anmeldetag: 11.11.2009
(51) Int. Cl.: G05B 19/404

(54) **Bearbeitungszentrum zum Fräsen und Bohren mit einer Einrichtung zur Anpassung der Vorschubbewegung an den Bearbeitungsvorgang**

(30) Priorität: 16.01.2009 DE 102009004894
(71) Anmelder: Maschinenfabrik Berthold Hermle AG, 78559 Gosheim (DE)
(72) Erfinder: Bernhard Franz-Xaver, 78549 Spaichingen (DE); Wiltschko, Dietmar, 78588 Denkingen (DE)
(74) Vertreter: Hager, Thomas Johannes

(57) **Zusammenfassung**

Die Erfindung betrifft ein Bearbeitungszentrum zum Fräsen und Bohren von Werkstücken mit unterschiedlichem Werkstückgewicht, mit einer werkstücktragenden und mit einer werkzeugtragenden Baugruppe, wobei die werkstücktragende Baugruppe mindestens eine direkt angetriebene Vorschubachse (8, 18) mit einem Torque-Motor (5,7) oder einem Linear-Motor(19, 20) besitzt, mit einer CNC-Werkzeugmaschinensteuerung (17) mit einem Interpolator (26) mit einer Vorschubregelung (9) und einem Leistungsteil (16) zum Steuern und Regeln des Antriebsmotors (5,7; 19, 20) für die direkt angetriebene Vorschubachse (8, 18). Um ein Bearbeitungszentrum zum Fräsen und Bohren mit einer direkt angetriebenen Vorschubachse einer werkstücktragenden Baugruppe so auszubilden, dass eine optimale Anpassung der Vorschubbewegung an den jeweiligen Bearbeitungsvorgang auf einem Bearbeitungszentrum automatisiert möglich wird, so dass ein optimales Bearbeitungsergebnis an Qualität und Quantität erzielt werden kann, ist erfindungsgemäß vorgesehen,
- dass die Vorschubregelung (9) ein Aufnahmemittel (11) besitzt, um über einen vordefinierten Messlauf den Ist-Wert der Stromaufnahme des Antriebsmotors (5, 7; 19, 20) der Vorschubachse (8, 18) im beliebig beladenen Zustand aufnehmen zu können,
- dass die Vorschubregelung (9) eine Berechnungseinheit (12) besitzt, um über den Ist-Wert der Stromaufnahme des Antriebsmotors (5, 7; 19, 20) die tatsächliche Motorauslastung bestimmten zu können, und
- dass die CNC-Werkzeugmaschinensteuerung (17) eine Berechungseinheit (13) besitzt, um mit Hilfe eines weiteren Aufnahmemittels (24) die tatsächliche Motorauslastung in die Berechungseinheit (13) einlesen und dann über die tatsächliche Motorauslastung, die tatsächliche Massenträgheit und davon abhängig die Optimierungswerte zum Steuern und Regeln des Antriebsmotors (5,7; 19,20) berechen zu können, die dann über ein Abgabemittel (27) an den Interpolator (26) und an die Vorschubregelung (9) ausgeben werden.

## Beschreibung

Die Erfindung betrifft ein Bearbeitungszentrum zum Fräsen und Bohren mit einer Einrichtung zur Anpassung der Vorschubbewegung an den Bearbeitungsvorgang.

Moderne Bearbeitungszentren zum Fräsen und Bohren von komplex gestalteten Werkstücken besitzen in der Regel fünf Vorschubachsen. Zum Beispiel drei lineare Vorschubachsen für die werkzeugtragende Baugruppe (Werkzeugspindel) und zwei rotative Vorschubachsen für die werkstücktragende Baugruppe (Werkstücktisch). Es sind jedoch auch andere Zuordnungen denkbar als die vorstehende genannten.

Die vorliegende Erfindung findet speziell bei einem Bearbeitungszentrum Anwendung, bei dem wenigstens eine rotative Vorschubachse oder eine lineare Vorschubachse dem Werkstücktisch und somit der werkstücktragenden Baugruppe zugeordnet ist.

Als Antriebe für die Vorschubachsen werden neuerdings auch sogenannte Direktantriebe eingesetzt; zum Beispiel Torque-Motoren für die rotativen Vorschubachsen oder Linear-Motoren für die linearen Vorschubachsen.

Diese Torque- und Linear-Motoren haben den großen Vorteil, dass keine mechanischen Übertragungsglieder (Kupplungen, Getriebe, Kugelumlaufspindeln usw.) notwendig sind, um die Antriebsenergie des Motors auf die zu bewegende Vorschubachse zu übertragen. Durch das Weglassen der mechanischen Übertragungsglieder werden die trägen Massen in der Antriebskette verringert, und die Dynamik der Vorschubachse wird wesentlich erhöht. In der Praxis erreicht eine Vorschubachse mit einem Direktantrieb Dynamikwerte, welche um ein Vielfaches über denen von konventionell angetriebenen Vorschubachsen liegen.

Um diese hohen verfügbaren Dynamiken der direkt angetriebenen Vorschubachsen optimal und effizient umsetzen zu können, muss die Vorschubbewegung besonders genau und präzise geregelt werden. Nur so kann ein optimales Bearbeitungsergebnis quantitativ und qualitativ gewährleistet werden.

Die Genauigkeit und die Präzision der Vorschubbewegung hängt maßgeblich von den voreingestellten Regelparametern der Vorschubregelung und des Interpolators (Sollwertgebers) ab, d. h. wie die Vorschubregelung und der Interpolator bei der Erstinbetriebnahme der Maschine im Herstellerwerk parametrisiert bzw. eingestellt wurden. In der Praxis ergibt sich nun das Problem, dass die voreingestellten Regelparameter der Vorschubregelung und des Interpolators nur auf ein sogenanntes "Durchschnittswerkstückgewicht bzw. Durchschnittsträgheitsmoment" abgestimmt werden können. Aufgrund der großen Bandbreite von Werkstückgewichten, die auf einem modernen Bearbeitungszentrum bearbeitet werden können - so sind zum Beispiel Bandbreiten von 1 kg bis 2.000 kg Werkstückgewicht auf ein und dem selben Werkstücktisch ohne weiteres möglich -, sind die Regelparameter für die Vorschubeinrichtung der werkstücktragenden Baugruppe in den meisten Fällen nie wirklich optimal eingestellt. In der Regel kann nur ein Kompromiss erreicht werden, da das tatsächlich vorhandene Werkstückgewicht bei der Erstinbetriebnahme üblicherweise nicht bekannt ist und auch während der Maschinenlebensdauer naturgemäß sehr stark schwankt. Denn mit der Werkzeugmaschine sollen natürlich auch unterschiedlichste Werkstückgeometrien und somit auch unterschiedlichste Werkstückgewichte bearbeitet werden. Dieser Sachverhalt macht sich bei einer Vorschubachse mit Direktantrieb besonders negativ bemerkbar, da durch die fehlende mechanische Leistungsumformung (Übersetzung) das Werkstückgewicht ungeteilt in die Regelung für die Vorschubbewegung eingeht. Bei einer Motor-Getriebe-Kombination ist dies so nicht der Fall, da je nach Getriebeübersetzung nur ein Bruchteil des Werkstückgewichtes einen Einfluss auf die Regelung der Vorschubbewegung hat.

In der EP 1 143 316 B1 ist eine NC-Werkzeugmaschine mit mehreren linearen und rotativen Vorschubachsen offenbart. Die werkstücktragende Baugruppe (Werkstücktisch) hat dabei eine lineare und mindestens eine rotative Vorschubachse. Die linearen Vorschubachsen (X-Y-Z) und die rotativen Vorschubachsen (A-B-C) werden konventionell mit Motor-Getriebekombination angetrieben, und zwar bei den linearen Vorschubachsen mit einer Kugelumlaufspindel und bei den rotativen Vorschubachsen mit einer Drehwelle.

Des Weiteren ist eine spezielle Vorschubregelung für die linearen Vorschubeinrichtungen der Vorschubachsen (X-Y-Z) beschrieben. Mit dieser speziellen Vorschubregelung kann ohne Zuhilfenahme einer externen Sensorik allein über die Vorschubregelung das tatsächlich auf dem Werkstücktisch vorhandene Werkstückgewicht ermittelt werden. Das so ermittelte Werkstückgewicht geht mittelbar als Regelgröße in die Vorschubregelung ein und beeinflusst somit die Regelgüte der Vorschubeinrichtung. Durch die Berücksichtigung des tatsächlichen Werkstückgewichts soll der Bearbeitungsprozess qualitativ verbessert werden.

Die in der EP 1 143 316 B1 offenbarte automatische Werkstückgewichtserkennung für die Verbesserung der Regelgüte ist aber für einen Direktantrieb so nicht einsetzbar. Das in der EP 1 143 316 B1 offenbarte Verfahren basiert im Kern auf der Erfassung des Soll-Stroms, indem im Anschluss an den Drehzahlregler der Soll-Strom abgegriffen wird. Mit Hilfe mehrere Testläufe mit unterschiedlichen Geschwindigkeits- und Beschleunigungsvorgaben, einmal konstante Geschwindigkeit und einmal konstante Beschleunigung, wird über den Soll-Strom die Ist-Beschleunigung der mechanischen Abtriebswelle (Kugelumlaufspindel) ermittelt. Mit Hilfe der ermittelten Ist-Beschleunigung wird dann durch ein spezielles Berechnungsverfahren mit speziellen Formeln und Algorithmen das tatsächliche Werkstückgewicht herausgerechnet. Die Ermittlung der Ist-Beschleunigung ohne externe Messwertaufnehmer (externe Sensorik) nur mit Hilfe der Antriebsregelung bzw. des Soll-Stroms ist aber nicht ausreichend genau. Aus diesem Grund kann das Werkstückgewicht mit diesem Verfahren auch nur abgeschätzt werden. Das in der EP 1 143 316 B1 offenbarte Verfahren ist für eine direkt angetriebene Vorschubachse aufgrund seiner Ungenauigkeit nicht wirtschaftlich anwendbar. Des Weiteren wird durch das in der EP 1 143 316 B1 offenbare Verfahren auch kein Einfluss auf den Interpolator (Sollwertgeber bzw. Positionssteuereinheit) genommen, so dass das abgeschätzte Werkstückgewicht keinen Einfluss auf den im Interpolator (Sollwertgeber) einzustellenden Ruck- und Beschleunigungswert hat. Außerdem zielt das in der EP 1 143 316 B1 offenbarte Verfahren primär darauf ab, nur die Qualität, nicht aber auch die Quantität der Bearbeitung zu verbessern, d. h. die Bearbeitungsdynamik zu steigern.

Ausgehend von diesem Stand der Technik liegt der vorliegenden Erfindung daher die Aufgabe zugrunde, ein Bearbeitungszentrum zum Fräsen und Bohren mit einer direkt angetriebenen Vorschubachse einer werkstücktragenden Baugruppe so auszubilden, dass eine optimale Anpassung der Vorschubbewegung an den jeweiligen Bearbeitungsvorgang auf einem Bearbeitungszentrum automatisiert möglich wird, so dass ein optimales Bearbeitungsergebnis an Qualität und Quantität erzielt werden kann.

Erfindungsgemäß wird diese Aufgabe gelöst durch ein Bearbeitungszentrum zum Fräsen und Bohren von Werkstücken mit unterschiedlichem Werkstückgewicht, mit einer werkstücktragenden und mit einer werkzeugtragenden Baugruppe, wobei die werkstücktragende Baugruppe mindestens eine direkt angetriebene Vorschubachse mit einem Torque-Motor oder einem Linear-Motor besitz, mit einer CNC-Werkzeugmaschinensteuerung mit einem Interpolator mit einer Vorschubregelung und einem Leistungsteil zum Steuern und Regeln des Antriebsmotors für die direkt angetriebene Vorschubachse, **dadurch gekennzeichnet,**
- **dass** die Vorschubregelung ein Aufnahmemittel besitzt, um über einen vordefinierten Messlauf den Ist-Wert der Stromaufnahme des Antriebsmotors der Vorschubachse im beliebig beladenen Zustand aufnehmen zu können,
- dass die Vorschubregelung eine Berechnungseinheit besitzt, um über den Ist-Wert der Stromaufnahme des Antriebsmotors die tatsächliche Motorauslastung bestimmten zu können kann, und
- dass die CNC-Werkzeugmaschinensteuerung eine Berechungseinheit besitzt, um mit Hilfe eines weiteren Aufnahmemittels die tatsächliche Motorauslastung in die Berechungseinheit einlesen und dann über die tatsächliche Motorauslastung, die tatsächliche Massenträgheit und davon abhängig die Optimierungswerte zum Steuern und Regeln des Antriebsmotors berechen zu können, die dann über ein Abgabemittel an den Interpolator und an die Vorschubregelung ausgeben werden.

Gemäß einer alternativen Lösung wird die Aufgabe gelöst durch ein Bearbeitungszentrum zum Fräsen und Bohren von Werkstücken mit unterschiedlichem Werkstückgewicht, mit einer werkstücktragenden und mit einer werkzeugtragenden Baugruppe, wobei die werkstücktragende Baugruppe mindestens eine direkt angetriebene Vorschubachse mit einem Torque-Motor oder einem Linear-Motor besitzt, mit einer CNC-Werkzeugmaschinensteuerung mit einem Interpolator mit einer Vorschubregelung und einem Leistungsteil zum Steuern und Regeln des Antriebsmotors für die direkt angetriebene Vorschubachse, **dadurch gekennzeichnet,**
- **dass** die Vorschubregelung ein Aufnahmemittel besitzt, um über einen vordefinierten Messlauf den Ist-Wert der Stromaufnahme des Antriebsmotors der Vorschubachse im beliebig beladenen Zustand aufnehmen zu können,
- dass die Vorschubregelung eine Berechnungseinheit besitzt, um über den Ist-Wert der Stromaufnahme des Antriebsmotors die tatsächliche Massenträgheit der Vorschubachse bestimmten zu können, und
- dass die CNC-Werkzeugmaschinensteuerung eine Berechungseinheit besitzt, um mit Hilfe eines weiteren Aufnahmemittels die tatsächliche Massenträgheit der Vorschubachse in die Berechungseinheit einlesen und dann über die tatsächliche Massenträgheit der Vorschubachse die Optimierungswerte zum Steuern und Regeln des Antriebsmotors berechen zu können, die dann über ein Abgabemittel an den Interpolator und an die Vorschubregelung ausgeben werden.

Der Vorteil der Erfindung liegt insbesondere darin, dass über einen automatisierbaren Messlauf und über eine automatisierbare Berechnung mittels mathematischer Funktionen, in welchen die Abhängigkeiten der Regelungs- und Beschleunigungsdynamik von dem Trägheitsmoment indirekt formuliert sind, die Parameter für die Vorschubdynamik auf das tatsächlich zu bearbeitende Werkstück hin genau und präzise optimiert werden können, so dass jede Werkstückgröße (Werkstückgewicht) optimal hinsichtlich Qualität und Quantität bearbeitet werden kann. Die Bewegungscharakteristik des Antriebsmotors kann auf das jeweilige Werkstück optimal angepasst werden.

Weitere Einzelheiten, Merkmale und Vorteile der Erfindung ergeben sich aus nachfolgender Beschreibung anhand der Zeichnungen. Es zeigen:
- Figur 1:: ein Bearbeitungszentrum nach dem Stand der Technik, bei dem die Vorschubachsen über Torque- oder Linearmotore angetrieben werden,
- Figur 2:: ein Bearbeitungszentrum nach der Erfindung gemäß einer ersten Ausführungsform, bei dem die Motorauslastung zur Bestimmung der Vorschubregelung herangezogen wird, und
- Figur 3:: ein Bearbeitungszentrum nach der Erfindung gemäß einer zweiten Ausführungsform, bei dem das Massenträgheitsmoment zur Bestimmung der Vorschubregelung herangezogen wird.

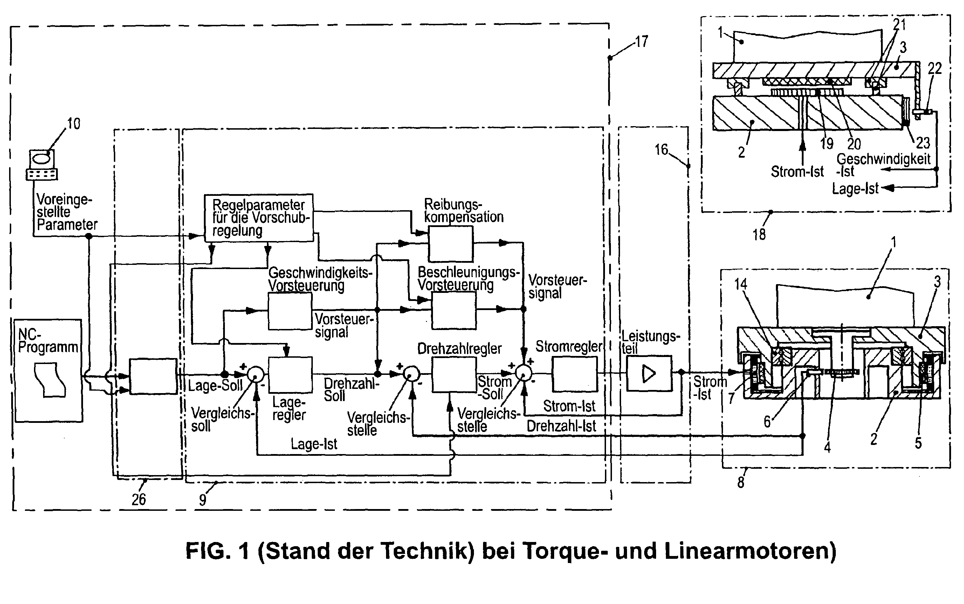

Figur 1 zeigt ein Bearbeitungszentrum nach dem Stand der Technik zum Fräsen und Bohren von Werkstücken 1 mit unterschiedlichem Werkstückgewicht, wobei die Werkstücke 1 auf einem an einem Gehäuse 2 des Bearbeitungszentrums über eine Tischlagerung 14 drehbar gelagerten Werkstücktisch 3 aufgenommen sind. An einer dem Werkstück 1 abgewandten Seite des Werkstücktisches 3 ist an einem nach unten abstehenden Zapfen eine Messscheibe 4 angeordnet, die mit einem am Gehäuse 2 gelagerten Messsensor 6 zusammenwirkt. Messscheibe 4 und Messsensor 6 sind Teile eines hochauflösenden Geschwindigkeits- und Lagemessgerätes.

Der Werkstücktisch 3 wird über einen Torque-Motor angetrieben, der einen am Werkstücktisch 3 angeordneten Rotor 5 mit Permanentmagneten und einen am Gehäuse 2 angeordneten Stator 7 mit Motorwicklung aufweist.

Infolge dieser Anordnung kann der Werkstücktisch 3 um eine rotative Achse 8 gedreht werden.

Die rotative Achse 8 steht mit einer CNC-Werkzeugmaschinensteuerung 17 in Verbindung, die über ein manuelles Eingabegerät 10 beeinflusst werden kann.

Die CNC-Werkzeugmaschinensteuerung 17 umfasst neben anderen in den Figuren im Einzelnen dargestellten und bezeichneten Bauteilen eine Vorschubregelung 9, einen Antriebsverstärker 16 und einen Interpolator 26.

Der Werkstücktisch 3 kann weiterhin um eine lineare Vorschubachse 18 bewegt werden. Dazu ist an dem Gehäuse 2 ein Stator 19 mit Motorwicklung eines Linearmotors angeordnet, der einem am Werkstücktisch 3 angeordneten Rotor 20 mit Permanentmagneten des Linearmotors gegenüberliegt. Über den aus Stator 19 und Rotor 20 gebildeten Linearmotor kann der Werkstücktisch 3 in Linearführungen 21 bewegt werden.

An dem Werkstücktisch 3 ist ein Messsensor 22 angeordnet, der mit einem am Gehäuse 2 gelagerten Messstab 23 zusammenwirkt. Messsensor 22 und Messstab 23 sind Teile eines hochauflösenden Geschwindigkeits- und Lagemessgerätes.

Über den Messsensor 22 und den Messstab 23 können die Ist-Geschwindigkeit und die Ist-Lage des Werkstücktisches 3 abgefragt werden. Weiterhin kann der Ist-Strom des Linearantriebes 19, 20 abgefragt werden.

Die vorstehend beschriebene Ausgestaltung findet sich auch bei dem erfindungsgemäßen Bearbeitungszentrum, so dass im Folgenden nur noch auf die zusätzlichen Komponenten eingegangen wird.

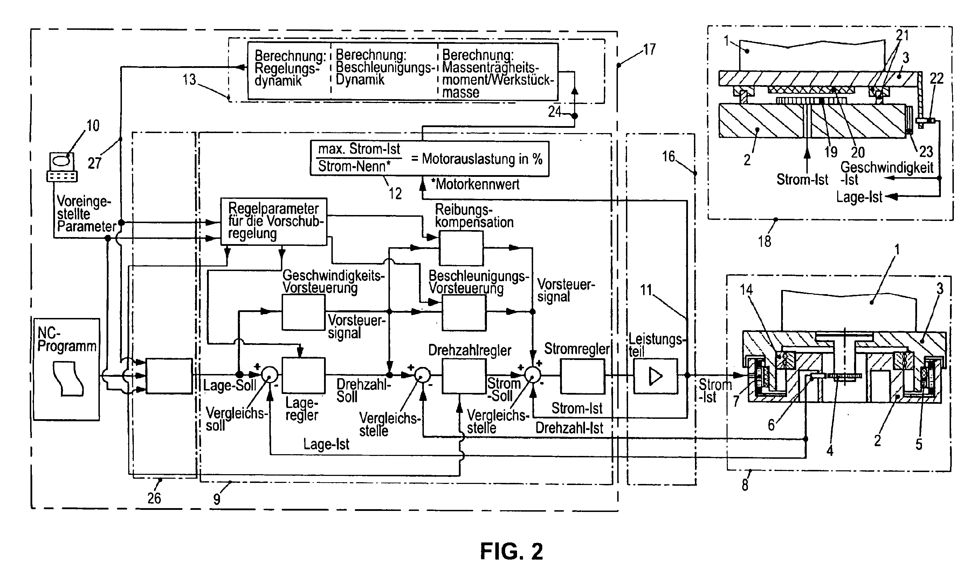

In Figur 2 ist eine erste Ausführungsform der erfindungsgemäßen Bearbeitungszentrums beschrieben, bei der die optimale Anpassung der Vorschubgeschwindigkeit an den Bearbeitungsvorgang über eine Bestimmung der tatsächlichen Motorauslastung des Antriebsmotors 5, 7; 19, 20 erfolgt.

Dazu ist ein Aufnahmemittel 11 für die Aufnahme des Ist-Stromes vorgesehen, welches mit einer Berechnungseinheit 12 für die Motorauslastung verbunden ist. Die Berechnungseinheit 12 für die Motorauslastung wiederum ist über ein Aufnahmemittel 24 für die Motorauslastung mit einer Berechnungseinheit 13 für die Optimierungswerte verbunden, welche mit Abgabemitteln 27 für die Optimierungswerte nach einem Messlauf verbunden ist.

Infolge dieser Ausgestaltung kann das Aufnahmemittel 11 der Vorschubregelung 9 über einen vordefinierten Messlauf den Ist-Wert der Stromaufnahme des Antriebsmotors 5, 7; 19, 20 der Vorschubachse 8, 18 im beliebig beladenen Zustand aufnehmen. Weiterhin kann die Berechnungseinheit 12 der Vorschubregelung 9 über den Ist-Wert der Stromaufnahme des Antriebsmotors 5, 7; 19, 20 die tatsächliche Motorauslastung bestimmen, und die Berechungseinheit 13 der CNC-Werkzeugmaschinensteuerung 17 kann mit Hilfe eines weiteren Aufnahmemittels 24 die tatsächliche Motorauslastung in die Berechungseinheit 13 einlesen und dann über die tatsächliche Motorauslastung, die tatsächliche Massenträgheit und davon abhängig die Optimierungswerte zum Steuern und Regeln des Antriebsmotors 5, 7; 19, 20 berechen. Die Optimierungswerte können dann über das Abgabemittel 27 an den Interpolator 26 und an die Vorschubregelung 9 ausgeben werden.

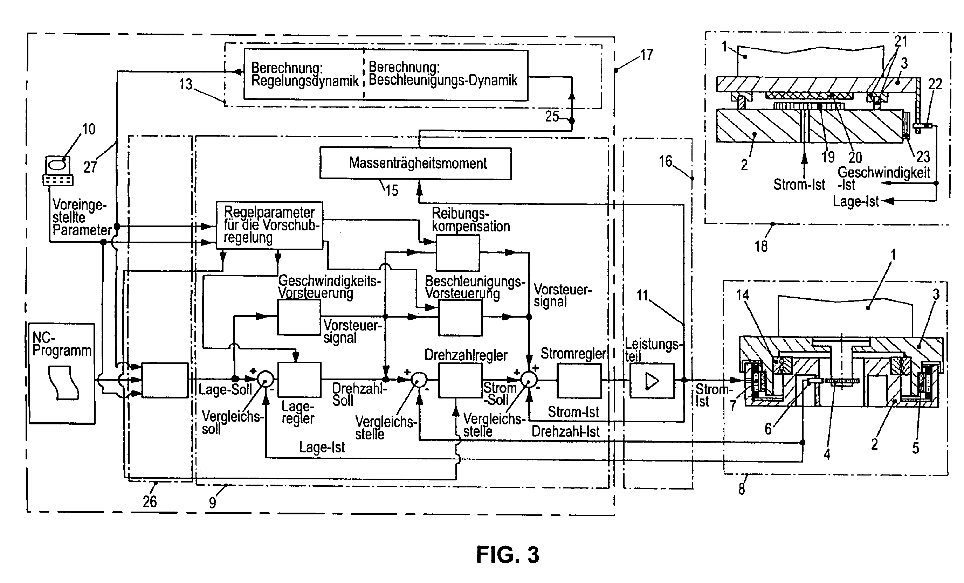

In Figur 3 ist eine zweite Ausführungsform der erfindungsgemäßen Bearbeitungszentrums beschrieben, bei der die optimale Anpassung der Vorschubgeschwindigkeit an den Bearbeitungsvorgang über eine Bestimmung der tatsächlichen Massenträgheit der Vorschubachse 8, 18 erfolgt.

Dazu ist das Aufnahmemittel 11 für die Aufnahme des Ist-Stromes mit einer Berechnungseinheit 15 für die Massenträgheit der Vorschubachse 8, 18 verbunden. Die Berechnungseinheit 15 für die Massenträgheit wiederum ist über ein Aufnahmemittel 25 für das Massenträgheitsmoment mit der Berechnungseinheit 13 für die Optimierungswerte verbunden, welche mit Abgabemitteln 27 für die Optimierungswerte nach einem Messlauf verbunden ist.

Infolge dieser Ausgestaltung kann das Aufnahmemittel 11 der Vorschubregelung 9 über einen vordefinierten Messlauf den Ist-Wert der Stromaufnahme des Antriebsmotors 5, 7; 19, 20 der Vorschubachse 8, 18 im beladenen Zustand aufnehmen. Weiterhin kann die Berechnungseinheit 15 der Vorschubregelung 9 über den Ist-Wert der Stromaufnahme des Antriebsmotors 5, 7; 19, 20 die tatsächliche Massenträgheit der Vorschubachse 8, 18 bestimmen, und die Berechungseinheit 13 der CNC-Werkzeugmaschinensteuerung 17 kann mit Hilfe des weiteren Aufnahmemittels 25 die tatsächliche Massenträgheit der Vorschubachse 8, 18 in die Berechungseinheit 13 einlesen und dann über die tatsächliche Massenträgheit der Vorschubachse 8, 18 die Optimierungswerte zum Steuern und Regeln des Antriebsmotors 5, 7; 19, 20 berechen. Die Optimierungswerte können dann über das Abgabemittel 27 an den Interpolator 26 und an die Vorschubregelung 9 ausgeben werden.

Die vorhergehende Beschreibung gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste:

- 1: Werkstück
- 2: Gehäuse
- 3: Werkstücktisch
- 4: Messscheibe
- 5: Rotor mit Permanentmagneten des Torque-Motors
- 6: Messsensor
- 7: Stator mit Motorwicklung des Torque-Motors
- 8: rotative Vorschubachse
- 9: Vorschubregelung
- 10: manuelles Eingabegerät
- 11: Aufnahmemittel
- 12: Berechnungseinheit für die Motorauslastung
- 13: Berechnungseinheit für die Optimierungswerte
- 14: Tischlagerung
- 15: Berechnungseinheit
- 16: Antriebsverstärker
- 17: CNC - Werkzeugmaschinensteuerung
- 18: lineare Vorschubachse
- 19: Stator mit Motorwicklung des Linearmotors
- 20: Rotor mit Permanentmagneten des Linearmotors
- 21: Linearführung
- 22: Messsensor
- 23: Messstab
- 24: Aufnahmemittel für die Motorauslastung
- 25: Aufnahmemittel für das Massenträgheitsmoment
- 26: Interpolator
- 27: Abgabemittel

## Patentansprüche

1. Bearbeitungszentrum zum Fräsen und Bohren von Werkstücken mit unterschiedlichem Werkstückgewicht, mit einer werkstücktragenden und mit einer werkzeugtragenden Baugruppe, wobei die werkstücktragende Baugruppe mindestens eine direkt angetriebene Vorschubachse (8, 18) mit einem Torque-Motor (5, 7) oder einem Linear-Motor (19, 20) besitzt, mit einer CNC-Werkzeugmaschinensteuerung (17) mit einem Interpolator (26) mit einer Vorschubregelung (9) und einem Leistungsteil (16) zum Steuern und Regeln des Antriebsmotors (5, 7; 19, 20) für die direkt angetriebene Vorschubachse (8, 18), **dadurch gekennzeichnet,**
- **dass** die Vorschubregelung (9) ein Aufnahmemittel (11) besitzt, um über einen vordefinierten Messlauf den Ist-Wert der Stromaufnahme des Antriebsmotors (5, 7; 19, 20) der Vorschubachse (8, 18) im beliebig beladenen Zustand aufnehmen zu können,
- **dass** die Vorschubregelung (9) eine Berechnungseinheit (12) besitzt, um über den Ist-Wert der Stromaufnahme des Antriebsmotors (5, 7; 19, 20) die tatsächliche Motorauslastung bestimmen zu können, und
- **dass** die CNC-Werkzeugmaschinensteuerung (17) eine Berechungseinheit (13) besitzt, um mit Hilfe eines weiteren Aufnahmemittels (24) die tatsächliche Motorauslastung in die Berechungseinheit (13) einlesen und dann über die tatsächliche Motorauslastung, die tatsächliche Massenträgheit und davon abhängig die Optimierungswerte zum Steuern und Regeln des Antriebsmotors (5, 7; 19, 20) berechen zu können, die dann über ein Abgabemittel (27) an den Interpolator (26) und an die Vorschubregelung (9) ausgeben werden.

2. Bearbeitungszentrum zum Fräsen und Bohren von Werkstücken mit unterschiedlichem Werkstückgewicht, mit einer werkstücktragenden und mit einer werkzeugtragenden Baugruppe, wobei die werkstücktragende Baugruppe mindestens eine direkt angetriebene Vorschubachse (8, 18) mit einem Torque-Motor (5, 7) oder einem Linear-Motor (19, 20) besitzt, mit einer CNC-Werkzeugmaschinensteuerung (17) mit einem Interpolator (26) mit einer Vorschubregelung (9) und einem Leistungsteil (16) zum Steuern und Regeln des Antriebsmotors (5,7; 19, 20) für die direkt angetriebene Vorschubachse (8, 18), **dadurch gekennzeichnet,**
- **dass** die Vorschubregelung(9) ein Aufnahmemittel (11) besitzt, um über einen vordefinierten Messlauf den Ist-Wert der Stromaufnahme des Antriebsmotors (5, 7; 19, 20) der Vorschubachse (8, 18) im beliebig beladenen Zustand aufnehmen zu können,
- **dass** die Vorschubregelung (9) eine Berechnungseinheit (15) besitzt, um über den Ist-Wert der Stromaufnahme des Antriebsmotors (5, 7; 19, 20) die tatsächliche Massenträgheit der Vorschubachse (8, 18) bestimmen zu können, und
- **dass** die CNC-Werkzeugmaschinensteuerung (17) eine Berechungseinheit (13) besitzt, um mit Hilfe eines weiteren Aufnahmemittels (25) die tatsächliche Massenträgheit der Vorschubachse (8, 18) in die Berechungseinheit (13) einlesen und dann über die tatsächliche Massenträgheit der Vorschubachse (8, 18) die Optimierungswerte zum Steuern und Regeln des Antriebsmotors (5, 7; 19, 20) berechen zu können, die dann über ein Abgabemittel (27) an den Interpolator (26) und an die Vorschubregelung (9) ausgeben werden.
